# EUROPÄISCHE PATENTANMELDUNG

(11) **EP 0 645 711 A1**
(43) Veröffentlichungstag der Anmeldung: **29.03.1995**
(21) Anmeldenummer: 94250192.5
(22) Anmeldetag: 27.07.1994
(51) Int. Cl.: G06F 11/16

(54) **Verfahren zum Betrieb eines Datensichtgerätes und Einrichtungen zur Durchführung des Verfahrens**

(30) Priorität: 17.09.1993 DE 4332143
(71) Anmelder: SIEMENS AKTIENGESELLSCHAFT, D-80333 München (DE)
(72) Erfinder: Forstreuter, Horst, Dipl.-Ing., D-38104 Braunschweig (DE); Weitner-von Pein, Achim, Dipl.-Ing., D-38126 Braunschweig (DE)

(57) **Zusammenfassung**

In zwei Verarbeitungskanälen, die vorzugsweise getrennt ausgeführt sind, werden aus den gleichen Ursprungsdaten unabhängig voneinander Prozeßdarstellungen generiert und abgespeichert. Über die abgespeicherten Daten werden nach einem bekannten mathematischen oder sonstigen Abbildungsverfahren reduzierte Prüfdaten (PD1, PD2) gebildet, die anschließend auf inhaltliche Übereinstimmung geprüft werden. Solange diese inhaltliche Übereinstimmung gegeben ist, stellen die Bildspeicher (FB1, FB2) dem Sichtgerät (S) Daten zur Verfügung, die die Darstellung eines wahrheitsgetreuen Prozeßabbildes zulassen. Dieser Prüfvorgang erfolgt in vorgegebenen zeitlichen Mindestabständen oder ereignisgesteuert vor der Ausgabe sicherheitskritischer Kommandos, deren Ausführung nicht mehr gesondert geprüft wird. Die Erfindung ist insbesondere vorgesehen für die Anwendung in Stellwerken und Betriebsleitstellen.

## Beschreibung

Die Erfindung bezieht sich auf ein verfahren nach dem Oberbegriff des Patentanspruchs 1. Ein derartiges Verfahren ist aus der DK-Zeitschrift "Järnvägs Teknik 76/2-3 vom März 1976, Seiten 46 und 47 bekannt.

Bei einem nach diesem Verfahren betriebenen Sichtgerät zur Steuerung und Überwachung des Betriebsgeschehens einer Bahnanlage gibt es zwei voneinander völlig unabhängige Sichtgerätesteuerungen, die im Wechsel auf das Sichtgerät aufgeschaltet werden; die Umschaltfrequenz beträgt dabei etwa 1Hz. Solange beide Sichtgerätesteuerungen dem Sichtgerät übereinstimmende Daten zuführen, wird dem Beobachter ein stehendes Bild vermittelt; weichen die an das Sichtgerät ausgegebenen Daten voneinander ab, so blinken die Darstellung oder Teile der Darstellung im Rhythmus der Umschaltfrequenz. Dies unterrichtet einen Beobachter davon, daß das ihm dargestellte Prozeßgeschehen nicht dem tatsächlichen Prozeßgeschehen entspricht; als Folge davon darf er fortan sicherheitskritische Kommandos, deren Zulässigkeit durch das Stellwerk nicht mehr geprüft wird, nicht mehr ausgeben. Nur wenn das Prozeßgeschehen durch ein stehendes Bild dargestellt wird, ist dies ein Zeichen dafür, daß die Darstellung dem aktuellen Prozeßgeschehen entspricht. Auf dem Bildschirm gibt es zusätzliche Kennzeichen, die dem Beobachter anzeigen, daß die Darstellung tatsächlich im Wechsel aus den beiden Sichtgerätesteuerungen gespeist wird und nicht etwa störungsbedingt aus nur einer Sichtgerätesteuerung kommt. Zur Funktionsprüfung der Datensichtgeräte selbst gibt es weitere Prüfverfahren, auf die hier aber nicht einzugehen ist. Nach der vorgenannten Literaturstelle besteht auch die Möglichkeit, etwaige Fehlansteuerungen eines Sichtgerätes automatisch, d. h. ohne Mitwirken eines Beobachters, zu erkennen.

Das bekannte Verfahren zur signaltechnisch sicheren Darstellung eines Betriebsgeschehens hat sich in der Praxis bewährt; es wird insbesondere bei der Steuerung von Bahnanlagen verwendet. Neuerdings besteht die Forderung, für die Darstellung des Prozeßgeschehens in Bahnanlagen sehr viel höherauflösende Sichtgeräte zu verwenden als bisher. Versuche haben gezeigt, daß es mit solchen Sichtgeräten - wenn sie nach dem vorgenannten Verfahren betrieben werden - Probleme gibt, weil es nicht ohne weiteres gelingt, die von den beiden unabhängigen Sichtgerätesteuerungen gelieferten Darstellungen aufeinander zu synchronisieren; es entsteht dann ein mehr oder weniger unruhiges Bild. Aus diesem Grund besteht Bedarf an einer nach einem anderen Verfahren arbeitenden Sichtgeräteüberwachung.

Aufgabe der Erfindung ist es deshalb, ein Verfahren nach dem Oberbegriff des Patentanspruches 1 anzugeben, mit dem es möglich ist, insbesondere bei hochauflösenden Sichtgeräten vom darzustellenden Prozeßgeschehen fehlerbedingt abweichende Prozeßabbildungen automatisch zu detektieren. Aufgabe der Erfindung ist es ferner, Einrichtungen zur Durchführung des Verfahrens für unterschiedliche Anwendungen anzugeben.

Die Erfindung löst diese Aufgabe durch die kennzeichnenden Merkmale des Patentanspruches 1. Sie basiert darauf, daß über die zweikanalig vorliegenden Bilddaten aus nur wenigen Bytes bestehende Prüfdaten gebildet werden, die sich problemlos auf Übereinstimmung überwachen lassen.

Dieser Vergleich soll gemäß Anspruch 2 nicht ständig stattfinden, sondern in vorgegebenen zeitlichen Mindestabständen, oder auch ereignisgesteuert beim Ausführen sicherheitskritischer Kommandos. Bei der Beurteilung der Zulässigkeit solcher Kommandos durch einen Bediener ist es besonders wichtig, daß das zur Darstellung gebrachte Betriebsgeschehen auch tatsächlich dem aktuellen Betriebsgeschehen entspricht. Die näheren Angaben zu den zeitlichen Folgeabständen der einzelnen Prüfvorgängen sind in den Ansprüchen 3 und 4 angegeben.

Eine besonders vorteilhafte Ausführungsform einer Einrichtung zur Durchführung des erfindungsgemäßen Verfahrens ist im Anspruch 5 näher bezeichnet. Sie sieht vor, daß voneinander unabhängige Sichtgerätesteuerungen verwendet werden, die auch die Prüfdaten bestimmen und daß der Prüfdatenvergleich in einem signaltechnisch sicheren Rechner oder in einem signaltechnisch sicheren Vergleicher erfolgt; ein solcher sicherer Vergleich außerhalb der Bausteine, die in die Datenverarbeitung der beiden Sichtgerätesteuerungen einbezogen sind, gewährleistet für den Störungsfall eine Störungserkennung mit sehr hoher Wahrscheinlichkeit.

Dort wo keine voneinander unabhängigen Sichtgerätesteuerungen vorhanden sind, sondern wo beide Sichtgerätesteuerungen gemäß Anspruch 6 durch zwei nicht sicher voneinander unabhängige Verarbeitungskanäle eines einzigen Rechners dargestellt sind, müssen zusätzliche Maßnahmen zum Aufdecken nicht auszuschließender gleichzeitiger und gleichartiger Fehler in den beiden Verarbeitungskanälen getroffen werden. Dies geschieht nach der Lehre des Anspruches 6 durch eine zusätzliche Funktionsprüfung des Redundanzkanals. Die Funktionsprüfung des Redundanzkanals sieht gemäß Anspruch 7 das Generieren und Prüfen eines bekannten Testbildes vor (Funktionsprüfung des Grafiktools), wobei die Generierung selbst in den Ansprüchen 10 und 11 beschrieben ist. Anspruch 10 sieht eine bewußte Verfälschung der Datenvorgabe vor zur Funktionsprüfung eines die Prüfdaten vergleichenden gemeinsamen Vergleichers für beide Verarbeitungskanäle.

Nach der Lehre des Anspruches 11 sollen im Rahmen des letztgenannten Prüfvorgangs von Fall zu Fall unterschiedliche Daten verfälscht werden, um systematische Fehler nach Möglichkeit auszuschließen. Anspruch 12 schließlich sieht die gegenständliche Realisierung der beiden Bildspeicher in einem gemeinsamen Speicherbaustein vor. Anspruch 13 regelt den Prozeßzugriff im Störungsfall und markiert eine etwaige Störung auch optisch am Datensichtgerät.

Die Erfindung ist nachstehend anhand von in der Zeichnung dargestellten Ausführungsbeispielen näher erläutert.

Dabei zeigt
Figur 1 eine Ausführungsform einer Einrichtung zur Durchführung des erfindungsgemäßen Verfahrens mit zwei vollständig getrennten Verarbeitungskanälen und signaltechnisch sicherem Prüfdatenvergleich,
Figur 2 eine Einrichtung mit nicht vollständig getrennten Verarbeitungskanälen aber ebenfalls signaltechnisch sicherem Prüfdatenvergleich zusammen mit Mitteln zur Funktionsprüfung des Referenzkanals,
Figur 3 eine entsprechende Einrichtung, bei der die bewertenden Rechner nicht signaltechnisch sicher ausgeführt sind und
Figur 4 eine Ausführungsform einer Einrichtung für eine sicherungstechnische Anwendung des Verfahrens mit nicht sicherungstechnischen Rechnern und einem gemeinsamen Vergleicher für den Prüfdatenvergleich.
Für einander entsprechende Funktionselemente wurden in den Figuren der Zeichnung jeweils die gleichen Bezugszeichen verwendet.

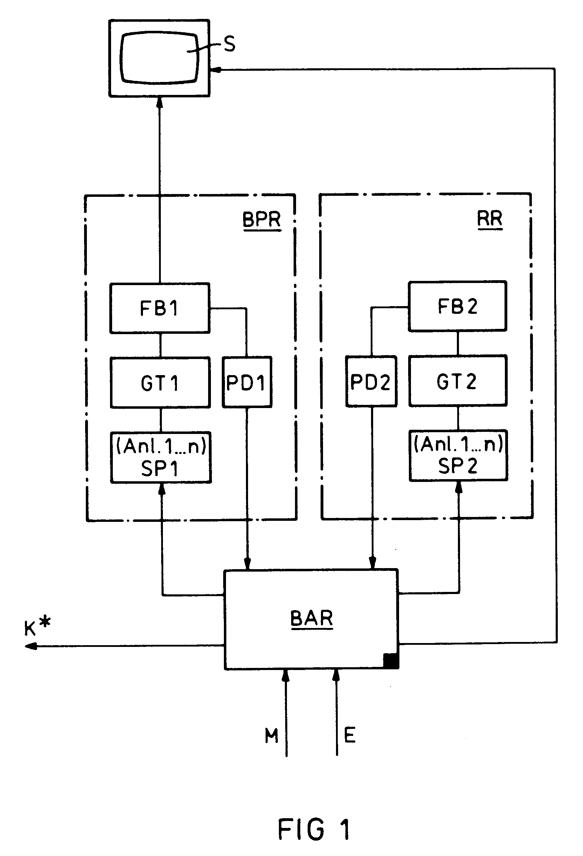

Figur 1 zeigt einen Rechner BAR (Bedien- und Anzeigerechner), dem von einem nicht weiter dargestellten Prozeß, z. B. einer zu steuernden und zu überwachenden Bahnanlage, Meldungen M über Prozeßzustände sowie von einer Eingabeeinrichtung Eingaben E zur Beeinflussung des Prozesses zugeführt werden. Die Meldungen und gegebenenfalls auch die Eingaben sind auf noch zu erläuternde Weise in eine Prozeßdarstellung einzubinden und auf einem Sichtgerät S zur Darstellung zu bringen. Bei dem Rechner BAR handelt es sich um einen signaltechnisch sicheren Rechner; darunter ist ein Rechner oder Rechnersystem zu verstehen, das so konzipiert ist, daß jeder Fehler sowohl in der Hard- als auch in der Software sicher offenbart wird und unter keinen Umständen zu einem unerkannten, unzulässigen Fehlerzustand im Rechner oder in der Rechnerausgabe führen kann. Dem signaltechnisch sicheren Rechner BAR nachgeschaltet sind zwei herkömmliche, signaltechnisch nicht sichere Rechner BPR (= Bedienplatzrechner) und RR (= Referenzrechner). Diese beiden Rechner beinhalten u. a. Speicher SP1 und SP2, in denen das jeweils darzustellende Prozeßgeschehen in binärer Form hinterlegt ist; es gibt also zwei identische Prozeßabbilder in den beiden Rechnern. Die gespeicherten Prozeßabbilder werden laufend durch die vom Prozeß kommenden Meldungen M und die Eingabe E der Kommandoeingabe aktualisiert. Jede Meldung beinhaltet Angaben über das Element, dem die Meldung zuzuordnen ist, und den jeweiligen Elementzustand. Durch eine Verfahrenssicherheit, auf die hier nicht einzugehen ist, ist sichergestellt, daß die in den Speichern SP1 und SP2 hinterlegten Prozeßabbilder dem tatsächlichen Prozeßgeschehen entsprechen; bei etwaigen Abweichungen soll dies der signaltechnisch sichere Rechner BAR erkennen und hieraus bestimmte Routinen ableiten, auf die hier auch nicht näher einzugehen ist.

Für die bedarfsweise Darstellung unterschiedlicher Prozeßgeschehen, z. B. die Darstellung des einen oder anderen Bahnhofes einer Eisenbahnanlage am Sichtgerät, sind in den Speichern SP1 und SP2 die laufend aktualisierten Datensätze einer entsprechenden Vielzahl von Prozeßabbildungen hinterlegt, wobei aus dieser Vielzahl von Abbildungen jeweils immer nur eines ausgewählt ist und der Darstellung am Datensichtgerät zugeführt wird. Die Entscheidung darüber, welches Prozeßgeschehen zur Darstellung gelangt (Anl. 1...n), kann der signaltechnisch sichere Rechner aufgrund eines ihm zugeführten Bedienerkommandos treffen.

Den beiden Speichern SP1 und SP2 sind je ein Graphiksystem GT1 und GT2 nachgeschaltet. Diese dienen in an sich bekannter Weise dazu, die in den Speichern SP1 und SP2 abgelegten Daten in eine für die Prozeßdarstellung geeignete Form umzusetzen. Zu diesem Zweck sind in den beiden Grafiksystem Einzelbilder über das darzustellende Prozeßgeschehen z. B. in Form von Weichen und Signalen als Grunddarstellung hinterlegt ohne Prozeßausprägung. Die Information, wo was darzustellen ist, entnehmen die Grafiksysteme den vorgeordneten Speichern SP1 uns SP2. In diesen Speichern ist hinterlegt, an welcher Stelle ein Prozeßelement darzustellen ist und wie es in Form und Farbe auszulegen ist. Das einzelne Grafiksystem holt für jedes Zeichen, das darzustellen ist, eine Anzahl Bytes aus seinem Speicher, bestimmt entsprechend der bitmäßigen Belegung dieser Bytes in den Speichern SP1 und SP2 die für die Darstellung dieses Zeichens erforderlichen Pixel und legt sie farbig aus. Die farbige Auslegung wird dabei durch die Meldezustände der darzustellenden Elemente und die Meldetelegramme bestimmt, die der signaltechnisch sichere Rechner BAR den Speichern SP1 und SP2 zugeführt hat. Die beiden Grafiksysteme hinterlegen die von ihnen bestimmten Pixel byteweise in einem zugeordneten Bildspeicher FB1 bzw. FB2. Aus dem Bildspeicher FB1 werden die Pixel über eine Bildaufbausteuerung zyklisch ausgelesen und als RGB-Signale dem Sichtgerät S zur Darstellung zugeführt. Beim Bildspeicher FB2 ist das nicht der Fall, weil diesem kein Sichtgerät nachgeschaltet ist; im übrigen aber stellt der Bildspeicher FB2 an seinem Ausgang - ordnungsgerechtes Funktionsverhalten vorausgesetzt - die gleichen Daten zur Verfügung wie der Bildspeicher FB1.

Um zu kontrollieren, ob die für die Darstellung am Sichtgerät S zur Verfügung gestellten Daten auf ihrem Wege vom Speicher SP1 über das Grafiksystem GT1 zum Bildspeicher FB1 nicht verfälscht wurden, werden die auf getrenntem Wege generierten und in den Bildspeichern FB1 und FB2 abgelegten Daten in an sich bekannter Weise auf Übereinstimmung geprüft. Dies erfolgt erfindungsgemäß aber nicht durch den Vergleich der dort anstehenden Nutzdaten; dies wäre wegen der Vielzahl der Daten, z. B. etwa 1,3 Megabyte, technisch kaum machbar. Vielmehr werden nach der Lehre der Erfindung über die in den Bildspeichern gespeicherten Daten nach einem an sich bekannten mathematischen oder sonstigen Abbildungsverfahren in Prüfdatenbildnern PD1, PD2 Prüfdaten gebildet, deren Umfang gegenüber den tatsächlich dort gespeicherten Daten außerordentlich stark reduziert ist. Die Prüfdaten umfassen nur einige wenige Bytes, die sich ohne großen Aufwand auf inhaltliche Übereinstimmung überprüfen lassen. Diese Prüfung findet im signaltechnisch sicheren Rechner BAR statt. Ist die Prüfung positiv verlaufen, dann ist das die Gewähr dafür, daß die im Bildspeicher FB1 anstehenden Daten unter der Voraussetzung das aktuelle Prozeßgeschehen wiedergeben, daß die Prozeßdaten selbst in signaltechnisch sicherer Weise in den Speichern SP1 und SP2 abgelegt wurden. Aus den dem Vergleich im signaltechnisch sicheren Rechner zugeführten Prüfdaten lassen sich die zugehörigen Nutzdaten zwar nicht mehr erkennen; dennoch besteht ein mathematischer Zusammenhang zwischen den auf Übereinstimmung geprüften Prüfdaten und den zugehörigen Nutzdaten für die Prozeßdarstellung. Weichen die Nutzdaten störungsbedingt voneinander ab, so ergeben sich in beiden Rechnerkanälen auch unterschiedliche Prüfdaten und der Prüfdatenvergleich verläuft negativ; dies ist ein Zeichen für eine fehlerhaft arbeitende Sichtgerätesteuerung.

Der vorstehend erläuterte Prüfvorgang läuft nicht ständig ab. Für die Funktionsüberwachung der Grafiksysteme und der Bildspeicher reicht es vielmehr aus, diesen Prüfvorgang innerhalb vorgegebener Mindestzeitspannen durchzuführen. Diese Mindestzeitspannen sind bestimmt durch die für das Darstellungssystem insgesamt zulässige Fehleroffenbarungszeit, die ihrerseits wiederum abhängig ist von einer rechnerisch bestimmbaren, kürzesten Folgezeit MTBF (meantime between failures) zwischen dem Auftreten zweier voneinander unabhängiger Fehler auf dem Weg vom signaltechnisch sicheren Rechner BAR zum Sichtgerät S.

Sollen von der Darstellung am Sichtgerät sicherheitskritische Kommandos K* abgeleitet werden, deren Ausführung durch keine weitere Automatik mehr überwacht wird, so ist die Ausführung eines solchen Kommandos u. a. abhängig zu machen von der Durchführung des vorstehend näher erläuterten Verfahrens zur Funktionsprüfung der Bildschirmdarstellung. Der sichere Rechner BAR verhindert dann die Ausführung eines sicherheitskritischen Kommandos K*, bis der Prüfvorgang erfolgreich abgeschlossen worden ist. Erst danach wird die Ausgabe des Kommandos zugelassen. Bei negativem Vergleichsergebnis wird dies auf geeignete Weise einem Bediener über das Sichtgerät und ggf. noch akustisch angezeigt.

Um sicherzugehen, daß die im Bildspeicher FB1 gespeicherten und über eine Bildaufbausteuerung auf dem Sichtschirm zur Darstellung gebrachten Darstellungen nicht im Sichtgerät selbst verfälscht werden, weil dort möglicherweise bestimmte Darstellungsbereiche in ihrer Farbaussage gar nicht mehr steuerbar sind, wird in bekannter Weise in größeren zeitlichen Abständen außerhalb des vorstehend erläuterten Prüfbetriebes das Sichtgerät selbst einer Funktionsprüfung unterzogen, indem es über den gesamten Bildschirm nacheinander mit allen darstellbaren Farben beaufschlagt wird; dabei erfolgt eine optische Kontrolle dieses Prüfvorganges durch einen Beobachter am Sichtgerät. Zusätzlich wird im Bild in bekannter Weise ein fest projektierter Farbbalken mit allen sicherheitsrelevanten Farben dargestellt, der dem Beobachter ständig eine Kontrolle über die korrekte Farbdarstellung ermöglicht.

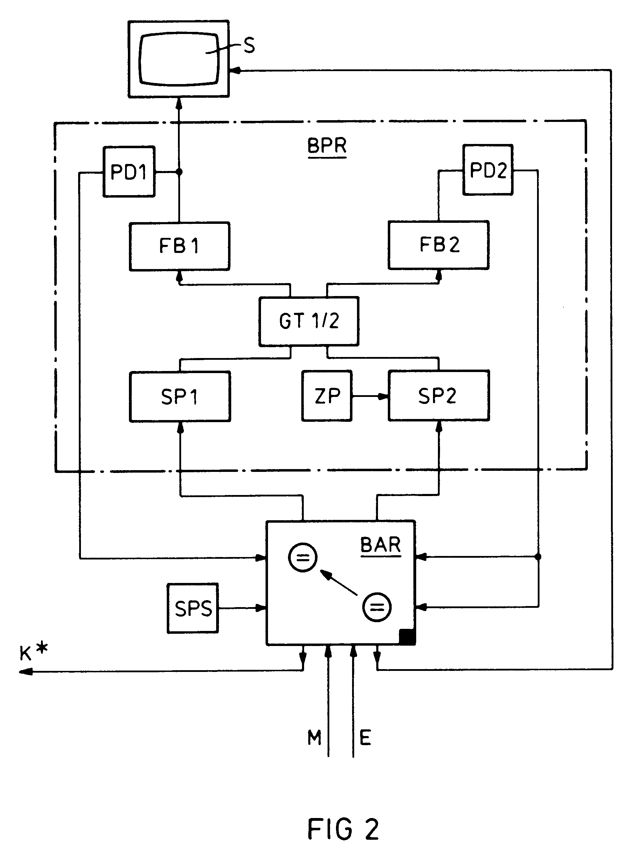

Solange die beiden Verarbeitungskanäle wie beim Ausführungsbeispiel der Figur 1 in getrennten Rechnern realisiert sind, reicht der vorgenannte Prüfdatenvergleich zur Funktionsprüfung der auf das Sichtgerät aufgeschalteten Sichtgerätesteuerung aus. Wenn aber die beiden Rechnerkanäle nicht mehr voneinander völlig getrennt sind, sondern wie beim Ausführungsbeispiel der Figur 2 durch einen gemeinsamen, nur teilweise zweikanalig ausgeführten Rechner realisiert sind, müssen zusätzliche Maßnahmen getroffen werden, um sicherzustellen, daß durch ein Fehlverhalten nicht in beiden Kanälen gleichartige oder gleichwirkende Fehler auftreten, die durch Vergleich der Speicherinhalte der beiden Bildspeicher nicht mehr sicher erkannt werden können. Vorzugsweise sind dann auch keine getrennten Bildspeicher vorhanden, sondern für beide Kanäle ist jeweils ein bestimmter Speicherbereich in einem gemeinsamen Bildspeicher reserviert; auch das Grafiksystem GT1/2 wird für beide Rechnerkanäle gemeinsam genutzt. Um nun für den Fall der Realisierung des Darstellungs- und des Referenzkanals durch einen einzigen Rechner BPR eine signaltechnisch sichere Darstellung eines Betriebsgeschehens zu gewährleisteh, muß zusätzlich zu dem bereits geschilderten Vergleich der reduzierten Prüfdaten im signaltechnisch sicheren Rechner BAR noch durch einen gesonderten Prüfvorgang festgestellt werden, daß der Referenzkanal zum Zeitpunkt des Prüfvorganges ordnungsgerecht arbeitet. Dies geschieht in der Weise, daß im Referenzkanal ein bekanntes Testbild generiert wird, über das ebenfalls ein reduziertes Prüfdatum gebildet und im signaltechnisch sicheren Rechner mit einem dort bekannten oder aus dem Testbild abgeleiteten Prüfdatum verglichen wird. Um dieses Testbild zu generieren, sind im Speicher SP2 neben den Daten für den Aufbau der Anlagendarstellungen auch die Daten für ein oder mehrere Grunddarstellungen eines Testbildes hinterlegt. Dieses Testbild beinhaltet sämtliche am Sichtschirm darstellbaren Prozeßelemente jeweils so häufig, wie diese Prozeßelemente unterschiedliche Ausprägungen erfahren können. Durch Zugriff auf Daten in einem Zustandsspeicher ZP werden die im Speicher SP2 abgespeicherte Element-Grund-Darstellungen des Testbildes modifiziert, so daß letztendlich sämtliche möglichen Elemente in sämtlichen möglichen Betriebszuständen vorliegen. Das Grafiksystem GT1/2 setzt diese Daten um in die für die Darstellung geeignete Form und übermittelt sie dem Bildspeicher FB2. Über die abgespeicherten Daten wird in bekannter Weise ein Prüfdatum gebildet und mit einem für das Testbild geltenden Prüfdatum verglichen, das in einem gesonderten Speicher SPS hinterlegt ist oder das sich der signaltechnisch sichere Rechner aus dem im Speicher SP2 abgelegten Datenbestand des Testbildes ermittelt. Stimmt das aus dem Testbild zurückgelesene Prüfdatum mit dem abgespeicherten bzw. selbst ermittelten Prüfdatum überein, ist dies ein Beleg dafür, daß sowohl das Grafiksystem GT2 als auch der Bildspeicher FB2 offensichtlich ordnungsgerecht gearbeitet haben. Wenn dies feststeht, kann die anschließend in den Referenzbildspeicher FB2 geschaltete Prozeßdarstellung als Vergleichsnormal für die Prozeßdarstellung des Anzeigekanals verwendet werden selbst dann, wenn beide Verarbeitungskanäle in einem einzigen Rechner realisiert sind.

Auch hier müssen in vorgegebenen Zeitabständen oder ereignisgesteuert immer wieder erneut Prüfvorgänge zum Aufdecken etwaiger Unregelmäßigkeiten in der Arbeitsweise der Sichtgerätesteuerungen durchgeführt werden, wobei diese Prüfvorgänge neben dem Vergleich der in den beiden Kanälen ermittelten Prüfdaten jedesmal auch den Vergleich der für das Testbild geltenden Prüfdaten beinhalten.

Wenn vorstehend jeweils von einem Testbild die Rede war, so beinhaltet dies begrifflich auch den Fall, daß mit einem einzigen Testbild nicht sämtliche möglichen Elementzustände erfaßt werden können, sondern daß dies beispielsweise nur durch zwei oder noch mehr unterschiedliche Testbilder möglich ist. In diesem Fall sind dann alle Testbilder nacheinander aufzuschalten und die einzelnen Prüfdaten zum Vergleich zurückzulesen. Die Testbilder selbst sind einmal bei der Inbetriebnahme eines Systems daraufhin zu kontrollieren, daß tatsächlich auch alle Elemente in allen ihren Ausprägungen erfaßt und korrekt dargestellt werden. Nachdem dies durch Vergleich einer graphischen Darstellung des Testbildes mit einer Liste sämtlicher möglicher Elementzustände festgestellt worden ist, können das Testbild bzw. die Testbilder in den dafür vorgesehenen Speichern des Referenzkanals hinterlegt werden; sie haben dann Geltung für alle nachfolgenden Prüfvorgänge.

Bei den beiden vorstehend erläuterten Ausführungsbeispielen findet der Vergleich der aus den zweikanalig generierten Darstellungsdaten gewonnenen Prüfdaten in einem signaltechnisch sicheren Rechner oder in einem signaltechnisch sicheren Vergleicher statt, wobei mindestens dann, wenn die beiden Verarbeitungskanäle für die Generierung der Anzeige- und der Referenzdaten nicht völlig unabhängig voneinander sind, Testbilder zur Funktionsprüfung des jeweiligen Referenzkanals verwendet werden.

Zum Steuern und Überwachen sicherheitskritischer Prozesse können auch paarweise zusammenwirkende nicht sichere Rechner verwendet werden, wenn sichergestellt ist, daß jeder Rechner für sich beim Erkennen von Abweichungen zwischen den aus den Speicherinhalten abgeleiteten Prüfdaten die weitere Ausgabe sicherheitskritischer Kommandos bleibend verhindert.

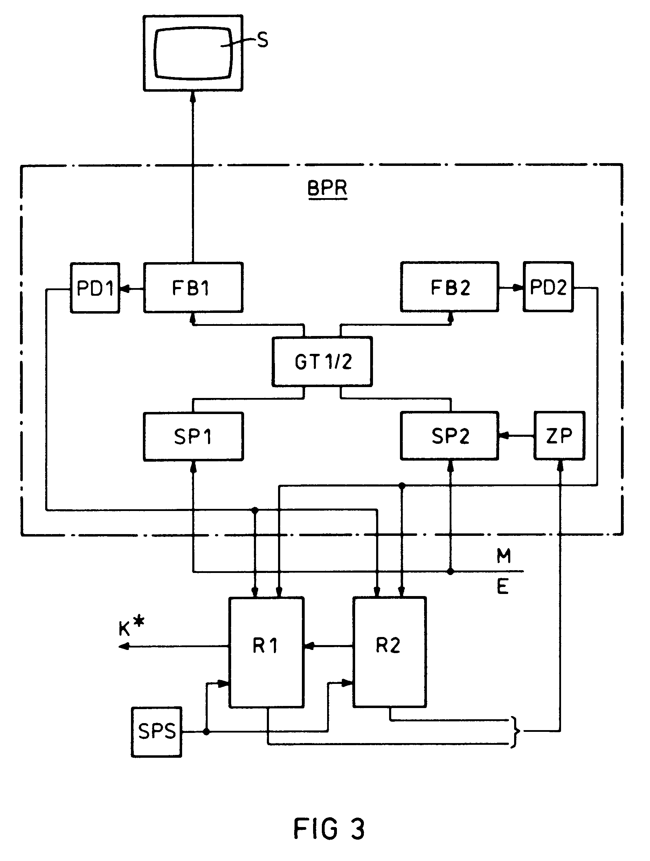

Eine solche Anordnung ist in Figur 3 dargestellt. Die Maldungen M und die Eingabe E werden getrennten Rechnern R1, R2 zugeführt, die signaltechnisch nicht sicher ausgeführt sind. Die Rechner bewerten unabhängig voneinander die Prüfdaten des Anzeige- bzw. Referenzkanals und wirken in der Weise zusammen, daß sicherheitskritische Kommandos K* nur dann an den Prozeß ausgegeben werden können, wenn beide Rechner R1 und R2 unabhängig voneinander Übereinstimmung zwischen den von den Prüfdatenbildnern PD1 und PD2 gebildeten Prüfdaten erkennen. Die Anordnung kann dabei auch so getroffen sein, daß einer der beiden Rechner R1 oder R2 durch den Rechner BPR dargestellt wird, so daß für die signaltechnisch sichere Darstellung nur noch ein weiterer Rechner R1 oder R2 vorzuhalten ist.

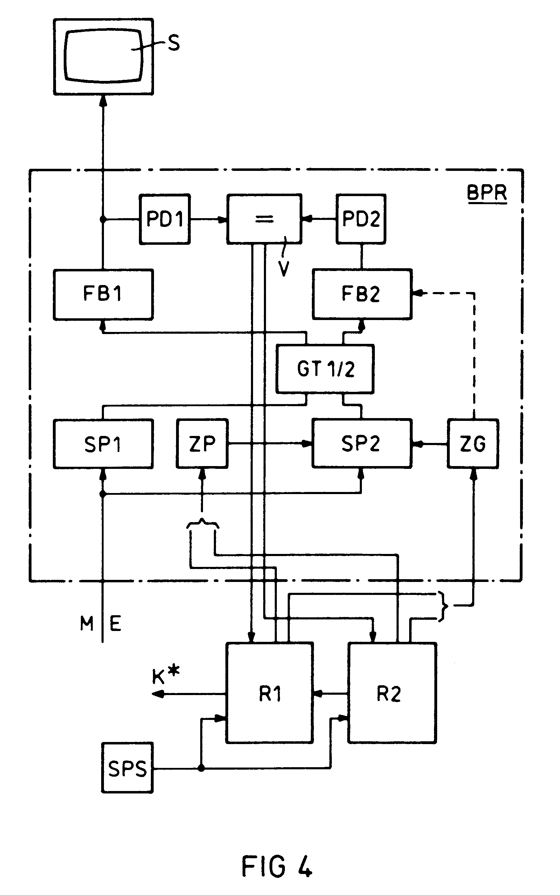

Figur 4 zeigt eine weitere Ausgestaltung einer Einrichtung zur Durchführung des Verfahrens mit nicht sicherungstechnischen Rechnern zum Erkennen von Darstellungsfehlern. Bei dieser Anordnung findet der Vergleich der Prüfdaten nicht in den beiden Rechnern des bewertenden Rechnersystems oder in einem signaltechnischen Rechner oder Vergleicher statt, sondern innerhalb eines signaltechnisch nicht sicher ausgeführten Vergleichers V. Dieser Vergleicher kann Bestandteil des Rechners BPR sein, er kann jedoch auch in diskreter Bauweise ausgeführt sein oder zu einem beliebigen anderen Rechner gehören. Da der Vergleicher V annahmegemäß als signaltechnisch nicht sicher ausgeführt ist, ist er auf ordnungsgerechtes Funktionsverhalten zu überprüfen. Für die Funktionsprüfung des Vergleichers gelten die gleichen Überlegungen wie für die Funktionsprüfung der Bauelemente des Referenzkanals, d. h. er ist in regelmäßigen Mindestabständen oder ereignisgesteuert vorzunehmen. Die Funktionsprüfung des Vergleicher V geschieht in der Weise, daß beide Rechner R1 und R2 jeder für sich einen gemeinsam Zufallsgenerator ZG anstoßen, der vorübergehend entsprechend seinem jeweiligen inneren Zustand ganz bestimmte Daten entweder im Speicher SP2 oder im Bildspeicher FB2 verändert. Über den Vergleicher V wird festgestellt, ob bei diesem Prüfvorgang der Vergleicher erwartungsgemäß eine Ungleichheit der ihm zugeführten Prüfdaten erkennt oder nicht. Erkennt er sie, so ist dies ein Beleg dafür, daß der Vergleicher noch funktionsfähig ist, andernfalls liegt ein Fehlverhalten des Vergleichers vor. Wenn die Rechner R1, R2 über die tatsächlich manipulierten Daten unterrichtet sind, kann auch der Absolutwert der Datenverfälschung in den Prüfvorgang einbezogen werden. Zusätzlich zur Funktionsprüfung des Vergleichers V hat auch eine Funktionsprüfung des Referenzkanals stattzufinden, die in bereits erläuterter Weise durch Aufschalten einer oder mehrerer Testbilder vor sich geht.

## Patentansprüche

1. Verfahren zum Betrieb eines Datensichtgerätes zum Darstellen eines Prozeßgeschehens unter Verwendung mindestens einer Sichtgerätesteuerung, welche die gleichen Eingangsdaten zweikanalig verarbeitet und welche ihre Ausgangsdaten über zugeordnete Bildspeicher mindestens mittelbar einem Vergleich auf inhaltliche Übereinstimmung zuführt,
**dadurch gekennzeichnet,**
daß über die in den Bildspeichern (FB1, FB2) abgelegten Ausgangsdaten nach einem an sich bekannten mathematischen oder sonstigen Abbildungsverfahren getrennte, von der Datenmenge her reduzierte Prüfdaten gebildet werden und daß diese Prüfdaten auf inhaltliche Übereinstimmung geprüft werden, wobei etwaige Abweichungen das Vorhandensein einer Störung in der Sichtgerätesteuerung anzeigen.

2. Verfahren nach Anspruch 1,
**dadurch gekennzeichnet,**
daß der Prüfdatenvergleich innerhalb vorgegebener zeitlicher Mindestabstände und/oder ereignisgesteuert durchgeführt wird.

3. Verfahren nach Anspruch 2,
**dadurch gekennzeichnet,**
daß der zeitliche Mindestabstand für die Ermittlung der Prüfdaten und den Prüfdatenvergleich bestimmt wird durch die zulässige Fehleroffenbarungszeit der Sichtgerätesteuerung.

4. Verfahren nach Anspruch 2,
**dadurch gekennzeichnet,**
daß bei Anwendung des Datensichtgerätes in einem System zur bedarfsweisen Ausgabe sicherheitskritische Kommandos (K*) auf der Grundlage der jeweiligen Darstellung des Prozeßgeschehens durch das Datensichtgerät die Ausführung jedes solchen Kommandos u. a. von einer im Rahmen der Kommandobearbeitung durchgeführten Prüfdatenermittlung mit anschließendem Prüfdatenvergleich mindestens über die Daten des zur Anzeige anstehenden Prozeßgeschehens abhängig gemacht ist.

5. Einrichtung zur Durchführung des Verfahrens nach einem der Ansprüche 1 bis 4,
**dadurch gekennzeichnet,**
daß zwei voneinander unabhängige Sichtgerätesteuerungen vorgesehen sind, von denen jede als signaltechnisch nicht sicherer Rechner (BPR, RR in Figur 1) ausgeführt ist, daß der eine Rechner (BPR) den Anzeigekanal bildet und über einen ersten Bildspeicher (FB1) auf ein Datensichtgerät (S) speist und daß der andere Rechner (RR) einen auf einen zweiten Bildspeicher (FB2) speisenden Referenzkanal bildet, daß die beiden Rechner über die in ihren Bildspeichern jeweils abgelegten Daten die Prüfdaten ermitteln und daß der Vergleich dieser Prüfdaten außerhalb der beiden Rechner in einem signaltechnisch sicheren Rechner (BAR) oder in einem signaltechnisch sicheren Vergleicher stattfindet.

6. Einrichtung zur Durchführung des Verfahrens nach einem der Ansprüche 1 bis 4,
**dadurch gekennzeichnet,**
daß für die Sichtgerätesteuerung ein einziger signaltechnisch nicht sicherer Rechners (BPR in Figur 2) mit zwei Verarbeitungskanälen vorgeshen ist, von denen der eine den Anzeigekanal bildet und über einen ersten Bildspeicher (FB1) auf ein Datensichtgerät (S) speist und von denen der andere einen auf einen zweiten Bildspeicher (FB2) speisenden Referenzkanals bildet, der im Zusammenhang mit jedem Prüfdatenvergleich auf ordnungsgerechtes Funktionsverhalten zu prüfen ist, daß der Rechner über die in den beiden Bildspeichern jeweils abgelegten Daten je ein Prüfdatum bildet und daß der Vergleich dieser Prüfdaten in einem signaltechnisch sicheren Rechner (BAR) oder Vergleicher oder in mindestens zwei signaltechnisch nicht sicheren Rechnern stattfindet, von denen jeder unabhängig vom anderen eine Störung detektieren kann.

7. Einrichtung nach Anspruch 6,
**dadurch gekennzeichnet,**
daß dem zweiten Bildspeicher (FB2) über den Referenzkanal in vorgegebenen zeitlichen Mindestabständen und/oder ereignisgesteuert anstelle von Prozeßdaten mindestens ein dem/den die Prüfdaten bewertenden Rechner/Rechnern (BAR in Figur 2, R1, R2 in Figur 4) bekanntes Testbild zuführbar ist, daß dieser/diese Rechner über die für das mindestens eine Testbild im zweiten Bildspeicher abgelegten Daten vorzugsweise nach den gleichen Gesetzmäßigkeiten wie bei der Prozeßdarstellung mindestens ein reduziertes Prüfdatum bildet/bilden und dieses vergleicht/vergleichen mit dem oder den aus dem mindestens einen Testbild direkt ableitbaren oder abgeleiteten Prüfdatum.

8. Einrichtung nach Anspruch 7,
**dadurch gekennzeichnet,**
daß das mindestens eine Testbild alle darzustellenden Prozeßelemente in all ihren verschiedenen Prozeßausprägungen umfaßt.

9. Einrichtung nach Anspruch 8,
**dadurch gekennzeichnet,**
daß die Elementzustandsdaten des mindestens einen Testbildes in einem Speicher (ZP) hinterlegt sind, aus dem sie bedarfsweise abgerufen und einem weiteren Speicher (SP2) zuführbar sind, in dem die Elementzustandsdaten eine dort hinterlegte Grunddarstellung des Testbildes ohne Zustandsausprägung ergänzen oder eine dort bei einem früheren Prüfvorgang hinterlegte Zustandsausprägung überschreiben.

10. Einrichtung nach einem der Ansprüche 5 bis 9,
**dadurch gekennzeichnet,**
daß zum Vergleich der Prüfdaten in beiden Rechnerkanälen ein gemeinsamer Vergleicher (V in Fig. 4) vorgesehen ist, der sein jeweiliges Vergleichsergebnis zur Bewertung einem oder mehreren Rechnern (R1, R2) zuführt,
daß dieser/diese Rechner in vorgegebenen zeitlichen Mindestabständen und/oder ereignisgesteuert durch einen entsprechenden Befehl den Dateninhalt des Bildspeichers (FB2) im Referenzkanal zu verändern sucht/suchen und
daß der oder die bewertenden Rechner (R1, R2) das Auftreten eines ungleiche Prüfdaten anzeigenden Vergleicherausgangssignals erkennen und eine Störung anzeigen.

11. Einrichtung nach Anspruch 10,
**dadurch gekennzeichnet,**
daß zum vorübergehenden Verändern des Bildspeicher-Datenbestandes ein Zufallsgenerator (ZG) vorgesehen ist.

12. Einrichtung nach einem der Ansprüche 5, 6, 7, oder 11,
**dadurch gekennzeichnet,**
daß mindestens die beiden Bildspeicher (FB1, FB2) durch unterschiedliche Speicherbereiche eines gemeinsamen Speichers dargestellt sind.

13. Einrichtung nach einem der Ansprüche 5 bis 12,
**dadurch gekennzeichnet,**
daß der/die die Prüfdaten bewertenden Rechner beim Feststellen etwaiger Abweichungen in den zu vergleichenden Prüfdaten einen etwaigen Zugriff auf den zu überwachenden Prozeß verhindert/verhindern und/oder mindestens am Sichtgerät eine Störungsmeldung setzt/setzen.
